# EUROPEAN PATENT SPECIFICATION

(11) **EP 1 582 284 B1**
(45) Date of publication and mention of the grant of the patent: **13.08.2008**
(21) Application number: 05251864.4
(22) Date of filing: 24.03.2005
(51) Int. Cl.: B23K 11/11, B23K 11/00, B23K 11/14, F16D 1/068, F16D 43/04

(54) **Method for resistance welding a first metal part to a second metal by melting projections**
Verfahren zum Widerstandschweissen eines ersten metallischen Teils zu einem zweiten metallischen Teil durch Schmelzen von Vorsprungen
Méthode de soudage par résistance d'une première pièce métallique à une seconde pièce métallique par fusion de protubérances

(30) Priority: 30.03.2004 JP 2004098010
(43) Date of publication of application: 05.10.2005
(73) Proprietor: Hiraoka Manufacturing Co., Ltd., Ohme-shi, Tokyo (JP)
(72) Inventor: Mukaida, Hidenori, Hiraoka Manufacturing Co., Ltd., Ohme-shi Toyko (JP)
(74) Representative: Gill, Stephen Charles

(56) References cited:
- US-A- 1 630 338
- US-A1- 2003 141 341
- PATENT ABSTRACTS OF JAPAN vol. 017, no. 306 (M-1428), 11 June 1993 (1993-06-11) -& JP 05 026265 A (HIRAOKA SEISAKUSHO:KK), 2 February 1993 (1993-02-02)
- DATABASE WPI Section Ch, Week 200158 Derwent Publications Ltd., London, GB; Class M23, AN 2001-525424 XP002336929 -& JP 2001 170773 A (MABUCHI R) 26 June 2001 (2001-06-26)

## Description

Methods consistent with the present invention relate to welding of metal parts, a first metal part and a second metal part, as exemplified by a sprocket and a clutch drum for a centrifugal clutch, a gear and a clutch drum for a centrifugal clutch, a shaft coupling for coupling a rotary output shaft and a clutch drum for a centrifugal clutch, etc. (see, for information, claims 1 and 8), which are employed chiefly as constituent parts of a motor-driven working machine such as a mowing machine or a chain saw.

Japanese patent application publication number JP 05 026265, which is considered to represent the most relevant state of the art, discloses fixing a clutch drum and a driven body by press molding reliably locking a side plate in a rotation direction. An engaging hole 17 in the outer periphery of which a notch part 19 is formed is formed in the central part of a side plate 15 of a clutch drum 11. A shaft part 37 formed to the end part of a driven body 23 mad of a metal is engaged with an engaging hole 17, and the end surface of the shaft part 37 is pressed and deformed by press molding to push out to the outer side. The side plate 15 is nipped between the end surface of the shaft part and a stepped part 39, formed in the outer peripheral surface of a shaft part 37, and caused to enter the notch part 19 to lock the side plate 15 in a rotation direction.

Whereas, Japanese patent application publication number 2001-170773 discloses a pressure application horn 5 connected to a spot welding tip 2 so that an insulating bar 3 with an elastic spring 4, mounted inside the spot welding tip, is movable vertically and is extendable beyond the spot welding tip.

US1,630,338 discloses the fabrication of a joint or connection between a pair of metallic members disposed at an angle to each other using electric welding.

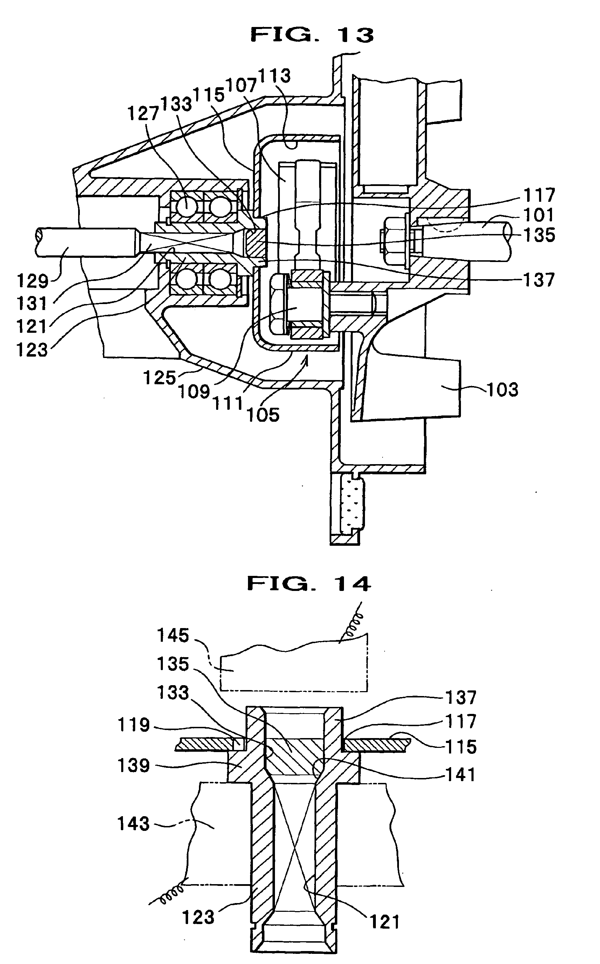

To illustrate a conventional example, referring now to FIG. 13, a clutch drum 111 for a centrifugal clutch 105 is formed of a stamped steel sheet, and a fitting hole 117 is provided in the center of a side plate 115 of the clutch drum 111. A driven shaft 123 has a rectangular hole 121 in which is fitted a rectangular shaft 131 formed at an end of a transmission shaft 129, and a boss portion 137 formed at an end of the driven shaft 123 is fitted in the fitting hole 117 in the side plate 115 of the clutch drum 111. A portion where the boss portion 137 is fitted in the fitting hole 117 is brazed with copper, so that the boss portion 137 of the driven shaft 123 and the side plate 115 are join ed together. The boss portion 137 of the driven shaft 123 has a bored hole 133, and a plug 135 is inserted into the bored hole 133. A portion where the plug 135 is inserted in the bored hole 133 is also brazed with copper.

Turning to FIG. 14, which is a magnified view of a principal portion of the conventional example shown in FIG. 13, the steel driven shaft 123 resulting from preparatory working and heat treatment is designed so that when the cylindrical boss portion 137 formed at the end of the steel driven shaft 123 is fitted into the fitting hole. 117 in the side plate 115 of the clutch drum 111 formed of a stamped steel sheet, and the side plate 115 comes in contact with a flanged stepped portion 139 provided on an outer cylindrical surface of the boss portion 137, a tip of the boss portion 137 protrudes by a predetermined dimension from the side plate 115. The columnar plug 135 has been inserted in the bored hole 133 in the boss portion 137 beforehand, and rests on a stepped portion 141 formed within the bored hole 133.

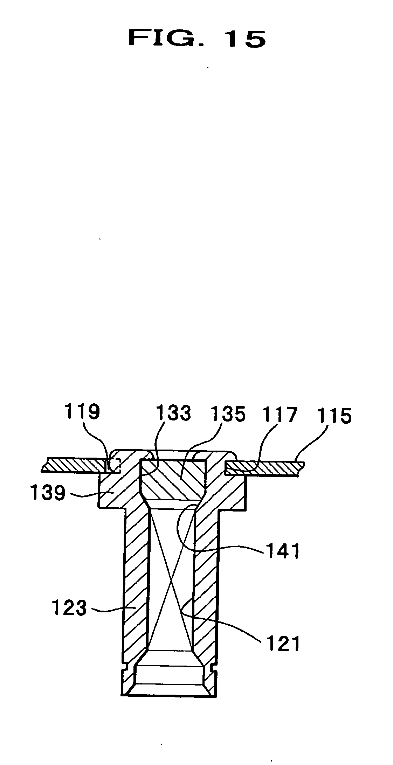

The driven shaft 123 is placed on a die 143 that is fixed on a table (not shown) of a press or stamping machine with an undersurface of the stepped portion 139 of the driven shaft 123 resting on the die 143. A punch 145 is applied to the boss portion 137, and a voltage is placed between the die 143 and the punch 145 to pass an electric current through the boss portion 137 so that the boss portion 137 becomes softened. As an end face of the boss portion 137 is pressed down, the end face of the boss portion 137 becomes deformed and flattened out to spread outwardly as shown in FIG. 15. Resultantly, the side plate 115 is held between the flattened boss portion 137 and the stepped portion 139, and the boss portion 137 comes into notches 119 formed around the circumferential edge of the fitting hole 117 so as to prevent the side plate 115 from rotating. On the other hand, the boss portion 137 becomes flattened out to spread inwardly so that the plug 135 is held between the flattened boss portion 137 and the stepped portion 141.

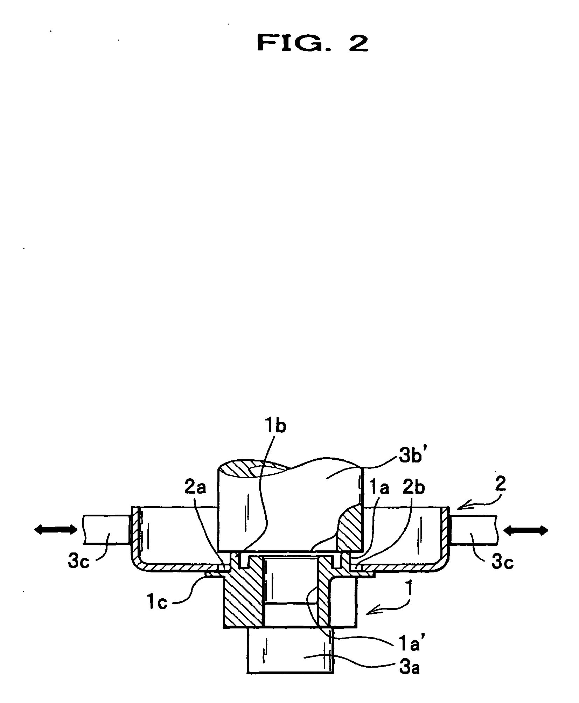

In FIG. 13, denoted by 103 is a fan attached to a crank shaft 101 of an engine, and denoted by 107 is a clutch shoe rotatably attached through a shaft 109 to the fan 103. As the crank shaft 101 of the engine rotates at a rotational speed greater than a predetermined rpm, the clutch shoe 107 is brought into contact with an inner cylindrical surface 113 of the clutch drum 111, and the rotation of the crank shaft 101 of the engine is transmitted to the clutch drum 111. The driven shaft 123 is pivotally supported on a clutch housing 125 by bearings 127 (*see* JP 7-3252 B2, Paragraphs 0002-0011; FIGs 2, 4 and 8).

According to the method for manufacturing a clutch drum as disclosed in JP 7-3252 B2, where the boss portion 137 formed at the end of the driven shaft 123 and the fitting hole 117 in the side plate 115 of the clutch drum 111, which have been fitted together, are brazed with copper under oxygen-depleted conditions at elevated temperatures in a furnace, the associated process of tempering the driven shaft 123 would destroy the durability of the rectangular hole 121 in which the transmission shaft 129 is fitted, and thus the process of brazing should be followed by heat treatment and polishing of the driven shaft 123. This would disadvantageously necessitate an increased number of person-hours, and increase the manufacturing cost.

According to the conventional method as described above, which comprises: placing the driven shaft so that the undersurface of the stepped portion 139 thereof rests on the die 143 fixed on the table (not shown) of the press or stamping machine; pressing the end face of the boss portion 137 down using the punch 145 to cause the end face of the boss portion 137 to become deformed and flattened out so as to spread outwardly, thereby holding the side plate 115 between the flattened boss portion 137 and the stepped portion 139; and allowing the softened boss portion 137 to come into the notches 119 so as to prevent the side plate 115 from rotating, an electric current is passed through the boss portion 137 so as to soften the boss portion 137, while pressing the end face of the boss portion 137. Since the boss portion 137 is thick, a large amount of electric current should be passed to heat the boss portion 137 enough to allow the end face of the boss portion 137 to become deformed by the pressing force of the punch 145. This also causes the driven shaft 123 to be tempered, which would destroy the durability of the rectangular hole 121 in which the transmission shaft 129 is fitted, and the process of brazing should therefore be followed by heat treatment and polishing of the driven shaft 123, disadvantageously increasing the number of person-hours and the associated manufacturing cost.

It would therefore be desirable to provide a method of welding metal parts, in which the above-described disadvantages are eliminated.

Illustrative, non-limiting embodiments of the present invention overcome the above disadvantages and other disadvantages not described above. Also, the present invention is not required to overcome the disadvantages described above, and an illustrative, non-limiting embodiment of the present invention may not overcome any of the problems described above.

It is a first aspect of the present invention to provide a welding method comprising: the features and steps of claim 1.

The above welding method may, preferably but not necessarily, further comprise: connecting a welding current feeding electrode of the electric resistance welding machine to the second metal part; and feeding a welding current through the welding current feeding electrode to perform resistance welding of a joint portion where the shaft of the first metal part is fitted in the fitting hole of the second metal part.

The above thin annular projection formed on the end face of the shaft of the first metal part may include a plurality of thin projections arranged in a loop.

The above-defined welding methods according to several aspects of the present invention obviates the necessity to heat the first metal part and the second metal part in a furnace as required in the case with the conventional method in which the joint portion, especially thick boss portion, is brazed with copper under high temperatures; therefore, disadvantageous deformation of the first and second metal parts can be prevented proactively.

The first metal part and the second metal part may include: for example, (1) a sprocket and a clutch drum for a centrifugal clutch; (2) a gear and a clutch drum for a centrifugal clutch; (3) a shaft coupling for coupling a rotary output shaft and a clutch drum for a centrifugal clutch. In these embodiments, heating at elevated temperature in a furnace is not required, and thus the first metal part, such as sprocket, gear, shaft coupling, etc. (esp. a bearing fitting hole of the sprocket or the gear, and a rectangular hole of the shaft coupling), which has been fmished before being joined, is prevented from becoming deformed.

According to a second aspect of the present invention, a welding method comprising the features and steps of claim 8 is defined. According to this method, the one end face of the sprocket or gear need not be heated under higher-temperature conditions than may be necessary and sufficient to join the sprocket or gear to the clutch drum 22 for a centrifugal clutch.

The thin annular projection of the first or second aspect of the invention or each of the plurality of projections of the third aspect of the invention may have a maximum thickness (in the radial direction) of 4mm. Preferably, the thickness is in the range of 1-4mm. Additionally or alternatively, the end face of the shaft of the first or second aspect of the invention or the end face of the sprocket or gear of the third aspect of the invention may have a boss portion radially inwardly of the or each projection. Preferably, the spacing (in the radial direction) between the boss portion and the or each projection is at least 2mm. More preferably, the spacing is in the range 2-3mm.

Other advantages and further features of the present invention will become readily apparent from the following detailed description of illustrative, non-limiting embodiments with reference to accompanying drawings, in which:
FIG. 1 depicts a series of sectional views of a first metal part and a second metal part joined by a welding method according to an exemplary embodiment of the present invention;
FIG. 2 is a sectional view of a first metal part and a second metal part joined by a welding method according to another exemplary embodiment of the present invention;
FIG. 3 is a plan view of a sprocket and a clutch drum for a centrifugal clutch joined by a welding method according to the present invention;
FIG. 4 is a perspective view of the sprocket and the clutch drum shown in FIG. 3;
FIG. 5 is a sectional view of a clutch drum for a centrifugal clutch as a modified form of the second metal part;
FIG. 6 illustrates a sprocket joined to a clutch drum by a welding method according to the present invention, with a chain looped over the sprocket;
FIG. 7 is a plan view of a gear and a clutch drum for a centrifugal clutch joined by a welding method according to the present invention;
FIG. 8 is a perspective view of the gear and the clutch drum shown in FIG. 7;
FIG. 9 depicts a series of sectional views of a shaft coupling for coupling a rotary output shaft and a clutch drum for a centrifugal clutch joined by a welding method according to yet another exemplary embodiment of the present invention;
FIG. 10 is a perspective view of the shaft coupling and the clutch drum joined by a welding method according to the present invention;
FIG. 11 depicts a series of sectional views of a sprocket or a gear and a clutch drum for a centrifugal clutch joined by a welding method according to yet another exemplary embodiment of the present invention;
FIG. 12 is a perspective view of a typical electric resistance welding machine applicable to the present invention;
FIG. 13 is a sectional view for explaining a conventional method for joining metal parts;
FIG. 14 is a magnified view of a principal portion as joined by the conventional method shown in FIG. 13; and
FIG. 15 is a magnified view of a joint portion resulting from the conventional method shown in FIGs. 13 and 14.

Exemplary embodiments of the present invention will hereinafter be described in detail with reference to the drawings. It is to be understood that corresponding elements are denoted in all figures by the same reference numerals, so a duplicate description will not be given for each embodiment, and merely the elements having different manner of operation in the individual embodiments are numbered differently.

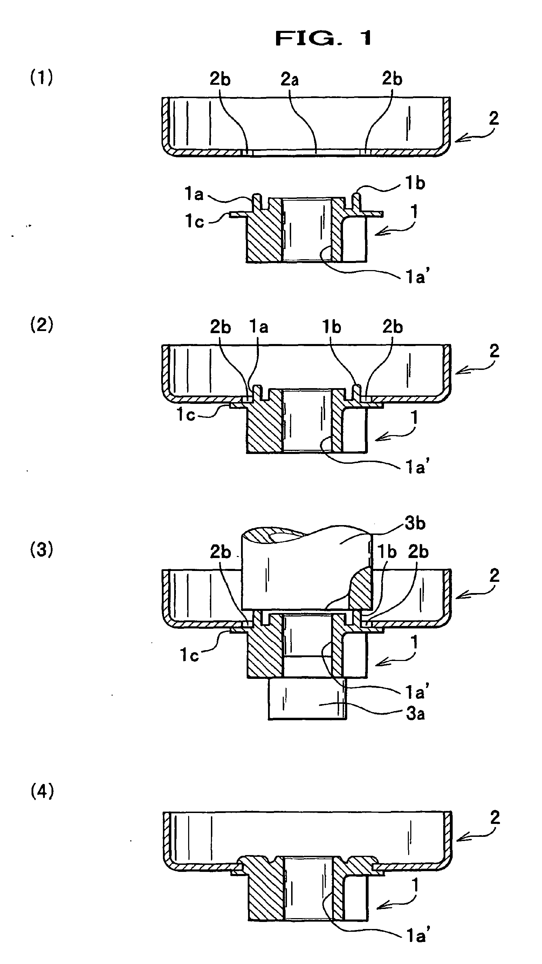

Referring now to FIG. 1, the process according to the welding method as a first embodiment of the present invention begins with provision of a first metal part 1 and a second metal part 2 as in step (1). The first metal part 1 is provided by presswork or stamping to have a shaft 1a and a thin annular projection 1b formed on an end face of the shaft 1a in such a manner that the projection 1b projects in a direction parallel to an axial line of the shaft 1a. The second metal part 2 is provided by presswork or stamping with a fitting hole 2a formed to fit on the shaft 1a (thin annular projection 1b) of the first metal part 1, and a plurality of notches 2b are formed around a circumferential edge of the fitting hole 2a. As shown in FIG. 1, the thin annular projection 1b is formed around a thick boss portion which is also formed protrusively at the end face of the shaft 1a, and the tip of the projection 1b is designed to protrude a predetermined distance beyond the second metal part 2 (preferably, beyond the tip of the thick boss portion thereof) when the shaft 1a of the first metal part 1 is fitted in the fitting hole 2a of the second metal part 2.

Next, in step (2), the fitting hole 2a of the second metal part 2 is fitted onto the shaft 1a of the first metal part 1. At this stage, on a top face of a flange portion 1c formed on the periphery of the shaft 1a of the first metal part 1, gaps are formed which are defined by the flange portion 1c, an outer cylindrical surface of the thin annular projection 1b, and the plurality of notches 2b formed around the circumferential edge of the fitting hole 2a.

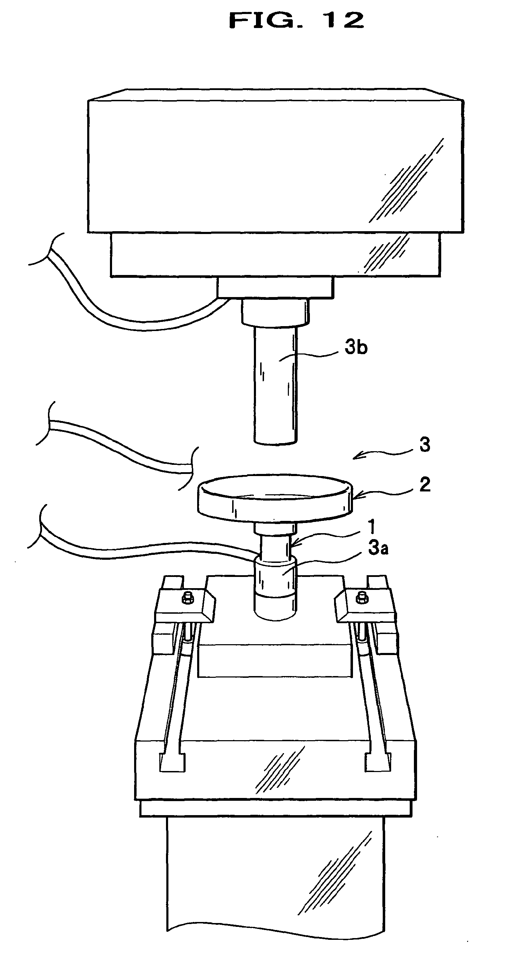

Next, in step (3), the first metal part 1 coupled with the second metal part 2 with the shaft 1a of the first metal part 1 fitted in the fitting hole 2a of the second metal part 2 is placed on a first (lower) electrode 3a of an electric resistance welding machine 3 *(see* FIG. 12), and a second (upper) electrode 3b of the electric resistance welding machine 3 is brought into contact with the thin annular projection 1b of the first metal part 1 fitted in the fitting hole 2a of the second metal part 2. Subsequently, the second electrode 3b is pressed onto the thin annular projection 1b, while a welding current is fed from the second electrode 3b through the projection 1b and the shaft 1a to the first electrode 3a.

Thus, in step (4), resistance welding is performed so that the projection 1b is fused and crushed into interstices left between the projection 1b and the fitting hole 2a, including the gaps defined by the projection 1b and the plurality of notches 2b formed around the circumferential edge of the fitting hole 2a.

In FIG. 1, denoted by reference numeral 1a' is a bearing fitting hole in which a bearing (not shown) is fitted.

Turning to FIG. 2, the welding method as a second embodiment of the present invention initially follows substantially the same process steps (1) and (2) as described above in conjunction with the first embodiment of the present invention, that is, provided in step (1) are: a first metal part 1 having a shaft 1a and a thin annular projection 1b formed on an end face of the shaft 1a in such a manner that the projection 1b projects in a direction parallel to an axial line of the shaft 1a; and a second metal part 2 having a fitting hole 2a formed so as to fit on the shaft 1a of the first metal part 1 in a manner that permits the tip of the shaft 1a to protrude a predetermined distance beyond the second metal part 2 whereas the fitting hole 2a has a plurality of notches 2b formed around a circumferential edge of the fitting hole 2a. Then, in step (2), the fitting hole 2a of the second metal part 2 is fitted onto the shaft 1a (thin annular projection 1b thereof) of the first metal part 1.

The second embodiment is different from the first embodiment in that, as shown in FIG. 2, when the first metal part 1 coupled with the second metal part 2 is subsequently placed on a first electrode 3a of an electric resistance welding machine 3, a welding current feeding electrode 3c of the electric resistance welding machine 3 is connected to the second metal part 2, and a pressing electrode 3b' of the electric resistance welding machine 3 is brought into contact with the thin annular projection 1b of the first metal part 1, so that a welding current is fed through the first electrode 3a, the pressing electrode 3b' and the welding current feeding electrode 3c to perform resistance welding of a joint portion where the shaft 1a of the first metal part 1 is fitted in the fitting hole 2a of the second metal part 2 and to fuse and crush the thin annular projection 1b into the plurality of notches 2b formed around the circumferential edge of the fitting hole 2a with a pressing force applied onto the projection 1b by the pressing electrode 3b'. The welding current is fed from the pressing electrode 3b' through the thin annular projection 1b and the shaft portion 1a of the first metal part 1 to the first electrode 3a, and from the welding current feeding electrode 3c through the second metal part 2 and the thin annular projection 1b to the first electrode 3a, the thin contact portions between the pressing electrode 3b' and the thin annular projection 1b as well as between the circumferential edge of the fitting hole 2a of the second metal part 2 and the thin annular projection 1b are caused to generate heat serving to fuse the thin annular projection 1b with the help of the pressing force given from above by the pressing electrode 3b' down onto the thin annular projection 1b. Consequently, the thin annular projection 1b is fused and crushed into the plurality of notches 2b formed around the circumferential edge of the fitting hole 2a, whereby the first metal part 1 and the second metal part are securely resistance welded together.

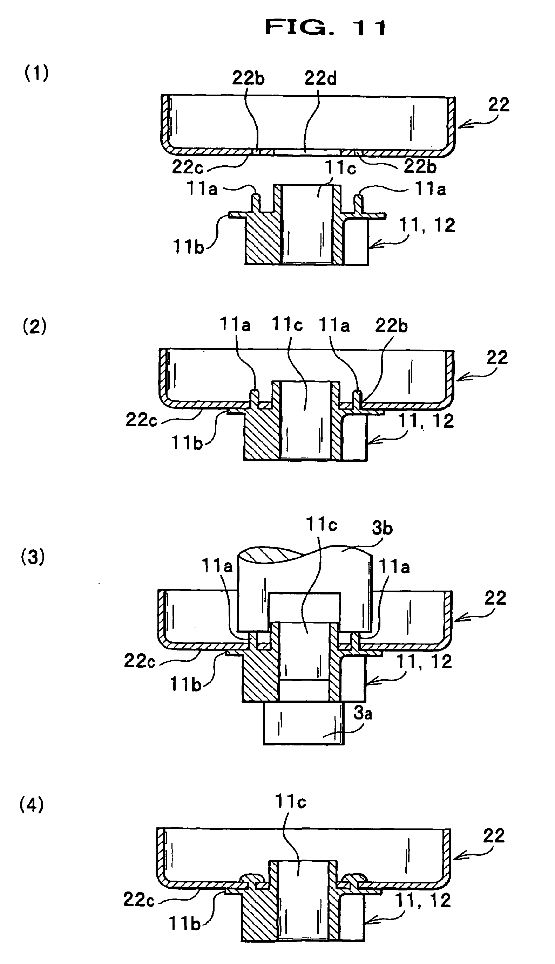

The thin annular projection 1b may alternatively be designed to include a plurality of thin projections arranged in a loop around the boss portion of the shaft 1a. One example of this modified embodiment will be exemplarily described later with reference to FIG. 11, in which a sprocket or a gear is employed as the first metal part.

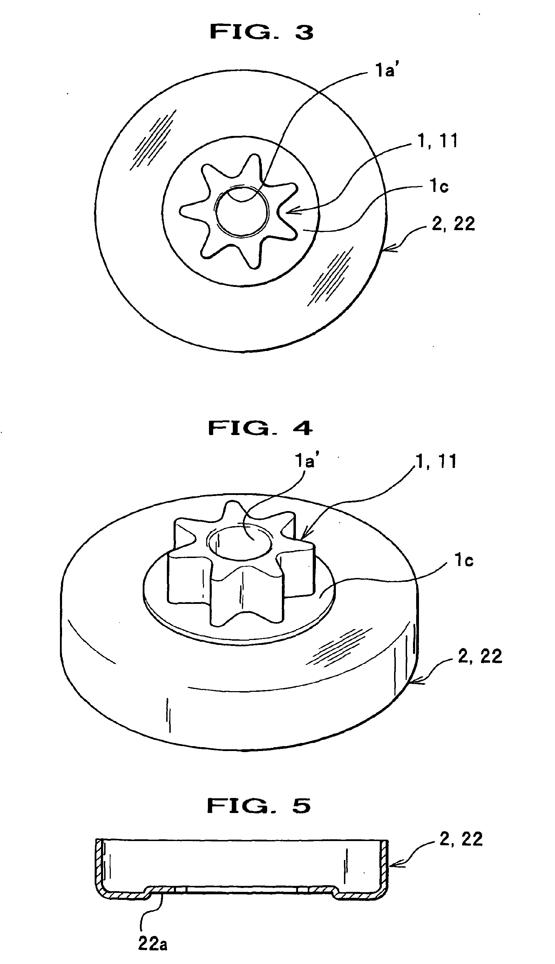

A welding method according to a third embodiment of the present invention is illustrated in FIGs. 3 and 4, which are a plan view and a perspective view, respectively, of a sprocket 11 as the first metal part 1 and a clutch drum 22 for a centrifugal clutch as the second metal part 2 that have been welded together according to the third embodiment of the present invention. The welding method as the third embodiment of the present invention may be implemented by following substantially the same process steps (1) through (4) as described above with reference to FIG. 1.

As shown in FIG. 5, the clutch drum 22 as the second metal part 2 for a centrifugal clutch may preferably be so designed that a sheet-like weld portion thereof into which the sprocket 11 as the first metal part 1 is welded has a recessed portion 22a. In this configuration, the sheet-like weld portion is enhanced by having the recessed portion 22a stepped back in the center thereof, so that planarity of the sheet-like portion can be maintained.

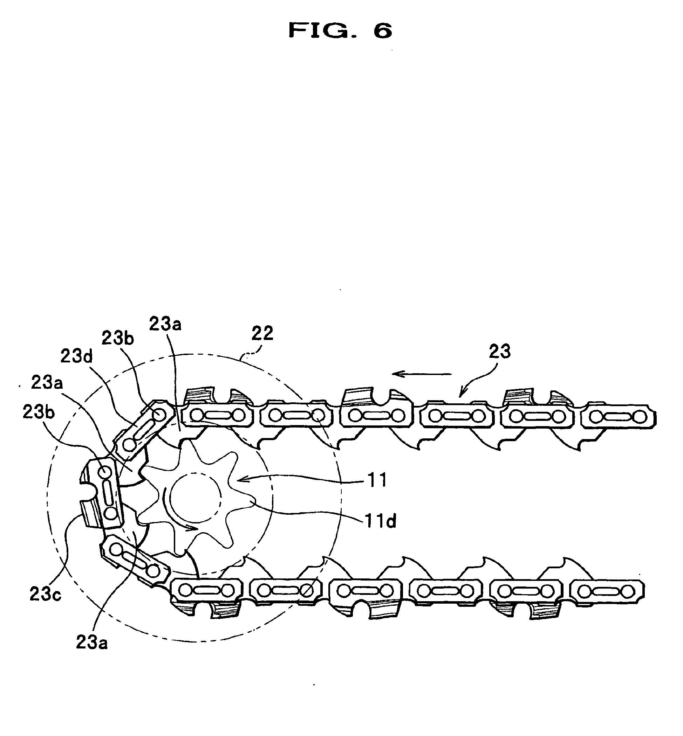

The sprocket 11 that is welded into the clutch drum 22 for a centrifugal clutch is illustrated in FIG. 6 in which a chain 23 for a chain saw is set around the sprocket 11. As shown in FIG. 6, drive links 23a engageable with teeth 11d of the sprocket 11 are coupled by rivets (tie rods) 23b with cutters 23c and tie straps 23d which are arranged alternately to form the chain 23.

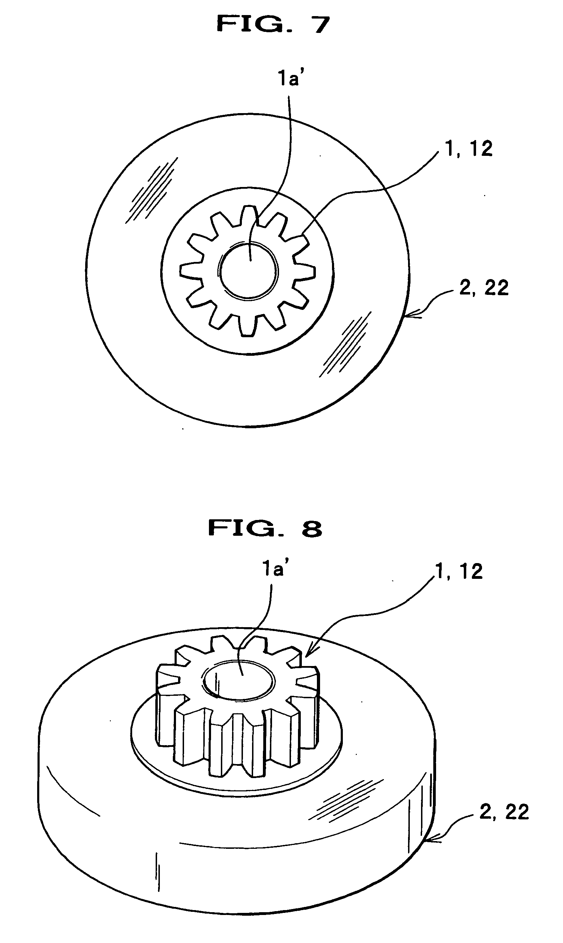

A welding method according to a fourth embodiment of the present invention is illustrated in FIGs. 7 and 8, which are a plan view and a perspective view, respectively, of a gear 12 as the first metal part 1 and a clutch drum 22 for a centrifugal clutch as the second metal part 2 that have been welded together according to the fourth embodiment of the present invention. The welding method as the fourth embodiment of the present invention may be implemented by following substantially the same process steps (1) through (4) as described above with reference to FIG. 1.

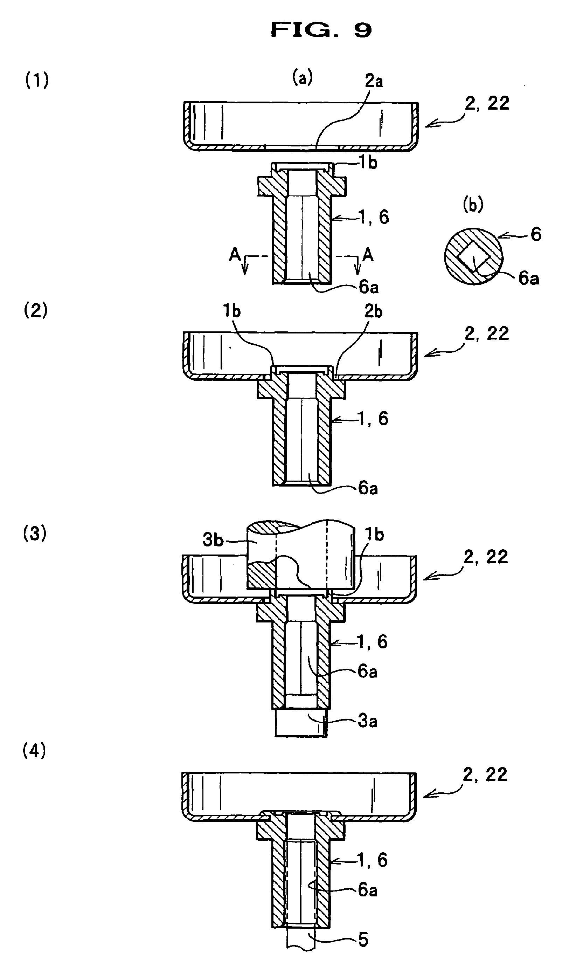

A description will be given of a welding method according to a fifth embodiment of the present invention with reference to FIG. 9. In the fifth embodiment, the first metal part 1 is a shaft coupling 6 for coupling a rotary output shaft 5 *(see* step (4) that will be described later) and the second metal part 2 is a clutch drum 22 for a centrifugal clutch. The welding method according to the fifth embodiment of the present invention is illustrated in process steps (1) through (4) of FIG. 9.

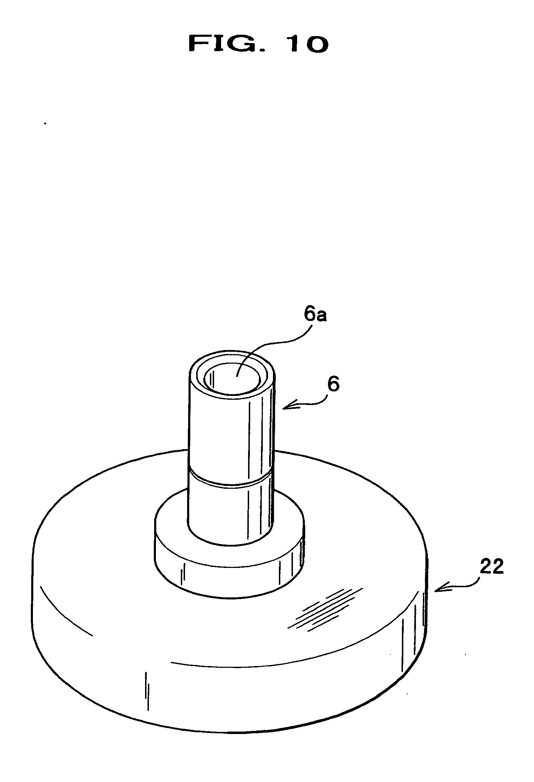

Steps (1) through (4) shown in FIG. 9 correspond to the process steps as described in conjunction with the first embodiment of the present invention with reference to FIG. 1. In FIG. 9, illustration (b) for step (1) is a cross-sectional view taken along line A-A of the sectional view (a) illustrated for explaining step (1) of the present embodiment. As shown in (b), a rectangular hole 6a is formed in the shaft coupling 6. FIG. 10 is a perspective view of the shaft coupling 6 and the clutch drum 22 that have been welded together according to the present embodiment. The rectangular hole 6a may be a square hole, a spline hole or a serration hole.

A description will be given of a welding method according to a sixth embodiment of the present invention with reference to FIG. 11. In step (1), first provided are: one of a sprocket 11 and a gear 12 having a plurality of projections 11a formed on one end face thereof and arranged in a loop; and a clutch drum 22 for a centrifugal clutch having a plurality of holes 22b formed in a sheet-like weld portion 22c thereof and arranged in a loop so as to allow the plurality of projections 11a to be fitted into the plurality of holes 22b in a manner that permits the tips of the projections 11a to protrude a predetermined distance beyond the second metal part 2 whereas the clutch drum 22 has a shaft insertion hole 22d in which a cylindrical shaft 11c for receiving a bearing of the one of the sprocket 11 and the gear 12 is inserted. Denoted by reference numeral 11b is a flange portion of the one of the sprocket 11 and the gear 12. The sheet-like weld portion 22c around the cylindrical shaft 11c rests on the flange portion 11b.

Next, in step (2), the plurality of holes 22b formed in the sheet-like weld portion 22c of the clutch drum 22 and arranged in a loop is fitted onto the plurality of projections 11a formed on the end face of the one of the sprocket 11 and the gear 12 and arranged in a loop.

Next, in step (3), the one of the sprocket 11 and the gear 12 is placed on a first electrode 3a of an electric resistance welding machine 3 *(see* FIG. 12). Then, a second electrode 3b of the electric resistance welding machine 3 is brought into contact with the plurality of projections 11a that protrudes through the plurality of holes 22b formed in the sheet-like weld portion 22c of the clutch drum 22 and arranged in a loop to fuse the plurality of projections 11a by application of welding current, and is pressed onto the plurality of projections 11a to crush the plurality of projections 11a, thereby performing resistance welding. Consequently, in step (4), the one of the sprocket 11 and the gear 12 as the first metal part 1 and the clutch drum 22 for a centrifugal clutch as the second metal part 2 can be welded together.

In the aforementioned embodiments of the present invention, a relatively thin projection(s) 1b (11a) is provided at a location(s) around and spaced from a thick boss portion (of the shaft 1a) of the first metal part 1 (11, 12), and thus the heat generated in the projection(s) 1b (11a) during resistance welding process would not produce any detrimental effect such that extra subsequent process steps (e.g., firing, tempering, polishing, etc. of the bearing fitting hole 1a' or inner surface of cylindrical shaft 11c) would be necessitated as in the conventional process. Thus, two finished complete metal parts can be joined together. With the result that the need for such subsequent treatment is eliminated, advantageously, the person-hours and manufacturing cost can be reduced. In addition, the projection(s) 1b (11a) is fused to extend over the flange portion 1c, 11b, so as to hold the sheet-like weld portion 22a, 22c, as well as to enter the notches 2b as in the case of the first through fifth embodiments. The deformation of the projection(s) 1b (11a) into a shape like a rivet having a head formed during the resistance welding advantageously serves to prevent the second metal part 2 from coming off from the first metal part 1.

## Claims

1. A welding method comprising:
providing a first metal part (1) and a second metal part (2), said first metal part (1) having a shaft (1a) with a thick boss portion and a thinner annular projection (1b), both being formed on an end face of the shaft (1a), said projection (1b) being around and spaced from said boss portion and projecting in a direction parallel to an axial line of the shaft (1a), said second metal part (2) having a fitting hole (2a) formed to fit on the shaft (1a) of the first metal part (1), said fitting hole (2a) having a plurality of notches (2b) formed around a circumferential edge of the fitting hole (2a);
fitting the fitting hole (2a) of the second metal part (2) onto the shaft (1a) of the first metal part (1);
placing the first metal part (1) on a first electrode (3a) of an electric resistance welding machine (3);
bringing a second electrode (3b, 3b') of the electric resistance welding machine (3) into contact with the thin annular projection (1b) of the first metal part (1); and
pressing the second electrode (3b, 3b') onto the thin annular projection (1b), while feeding a welding current through the first and second electrodes (3a; 3b, 3b'), to fuse and crush the projection (1b) into the plurality of notches (2b) formed around the circumferential edge of the fitting hole (2a).

2. A welding method according to claim 1, further comprising:
connecting a welding current feeding electrode (3c) of the electric resistance welding machine (3) to the second metal part (2); and
feeding a welding current through the welding current feeding electrode (3c) to perform resistance welding of a joint portion where the shaft (1a) of the first metal part (1) is fitted in the fitting hole (2a) of the second metal part.

3. A welding method according to claim 2, wherein the second electrode (3b, 3b') is a pressing electrode of the resistance welding machine and the pressing electrode is for applying a pressing force on to the projection(1b).

4. A welding method according to any one of claims 1 through 3, wherein the thin annular projection (1b) formed on the end face of the shaft (1a) of the first metal part (1) includes a plurality of thin projections arranged in a loop.

5. A welding method according to any one of claims 1 through 4, wherein the first metal part (1) is a sprocket (11) and the second metal part (2) is a clutch drum (22) for a centrifugal clutch.

6. A welding method according to any one of claims 1 through 4, wherein the first metal part (1) is a gear (12) and the second metal part (2) is a clutch drum (22) for a centrifugal clutch.

7. A welding method according to any one of claims 1 through 4, wherein the first metal part (1) is a shaft coupling (6) for coupling a rotary output shaft (5) and the second metal part (2) is a clutch drum (22) for a centrifugal clutch.

8. A welding method comprising:
providing one of a sprocket (11) and a gear (12) having a thick boss portion and a plurality of thinner projections (11a), both being formed on one end face thereof around and spaced from the thick boss portion arranged, the plurality of projections (11a) being in a loop, and a clutch drum (22) for a centrifugal clutch having a plurality of holes (22b) formed in a sheet-like weld portion (22c) thereof and arranged in a loop so as to allow the plurality of projections (11a) to be fitted into the plurality of holes (22b);
fitting the plurality of holes (22b) onto the plurality of projections (11a);
placing the one of the sprocket (11) and the gear (12) on a first electrode (3a) of an electric resistance welding machine (3);
bringing a second electrode (3b) of the electric resistance welding machine (3) into contact with the plurality of projections (11a) protruding through the holes (22b) formed in the sheet-like weld portion (22c) of the clutch drum (22); and
pressing the second electrode (3b) onto the plurality of projections (11a), while feeding a welding current through the first and second electrodes (3a, 3b), to fuse and crush the plurality of projections (11a).

## Patentansprüche

1. Schweißverfahren, umfassend:
Bereitstellen eines ersten Metallwerkstücks (1) und eines zweiten Metallwerkstücks (2), wobei das erste Metallwerkstück (1) eine Welle (1a) mit einem dicken Nabenteil und einem dünneren ringförmigen Ansatz (1b) aufweist, wobei beide auf einer Stirnfläche der Welle (1a) ausgebildet sind, wobei der Ansatz (1b) um den Nabenteil herum und von diesem beabstandet angeordnet ist und in eine zu einer achsialen Linie der Welle (1a) parallelen Richtung vorsteht, wobei das zweite Metallwerkstück (2) ein Passloch (2a) aufweist, welches auf die Welle (1a) des ersten Metallwerkstücks (1) passt, wobei das Passloch (2a) eine Vielzahl an Einschnitten (2b) aufweist, die um den Umfangsrand des Passlochs (2a) herum ausgebildet sind;
das Aufbringen des Passlochs (2a) des zweiten Metallwerkstücks (2) auf die Welle (1a) des ersten Metallwerkstücks (1);
das Platzieren des ersten Metallwerkstücks (1) auf einer ersten Elektrode (3a) einer Widerstandsschweißmaschine (3);
Herstellen eines Kontakts zwischen einer zweiten Elektrode (3b, 3b') der Widerstandsschweißmaschine (3) und dem dünnen ringförmigen Ansatz (1b) des ersten Metallwerkstücks (1); und
Drücken der zweiten Elektrode (3b, 3b') auf den dünnen ringförmigen Ansatz (1b), während durch die erste und zweite Elektrode (3a; 3b, 3b') ein Schweißstrom geleitet wird, um den Ansatz (1b) mit der Vielzahl an Einschnitten (2b), die um den Umfangsrand des Passlochs (2a) ausgebildet sind, zu verschmelzen und diesen in die Vielzahl an Einschnitten (2b) zu drücken.

2. Schweißverfahren nach Anspruch 1, ferner umfassend:
Herstellen eines Kontaktes einer Schweißstromzufuhrelektrode (3c) der Widerstandsschweißmaschine (3) mit dem zweiten Metallwerkstück (2); und
Zuführen eines Schweißstroms durch die Schweißstromzufuhrelektrode (3c) zur Durchführung eines Widerstandsschweißvorgangs eines Verbindungsabschnitts, wo die Welle (1a) des ersten Metallwerkstücks (1) in das Passloch (2a) des zweiten Metallwerkstücks eingepasst wird.

3. Schweißverfahren nach Anspruch 2, worin die zweite Elektrode (3b, 3b') eine Presselektrode der Widerstandsschweißmaschine ist und die Presselektrode zur Ausübung einer Druckkraft auf den Ansatz (1 b) dient.

4. Schweißverfahren nach einem der Ansprüche 1 bis 3, worin der dünne ringförmige Ansätze (1 b), der auf der Stirnfläche der Welle (1a) des ersten Metallwerkstücks (1) ausgebildet ist, eine Vielzahl dünner Ansätze umfasst, die in einem geschlossenen Kreis angeordnet sind.

5. Schweißverfahren nach einem der Ansprüche 1 bis 4, worin das erste Metallwerkstück (1) ein Kettenrad (11) ist und das zweite Metallwerkstück (2) ein Kupplungsgehäuse (22) für eine Zentrifugalkraftkupplung ist.

6. Schweißverfahren nach einem der Ansprüche 1 bis 4, worin das erste Metallwerkstück (1) ein Getriebezahnrad und das zweite Metallwerkstück (2) ein Kupplungsgehäuse (22) für eine Zentrifugalkraftkupplung ist.

7. Schweißverfahren nach einem der Ansprüche 1 bis 4, worin das erste Metallwerkstück (1) eine Wellenkupplung (6) zur Kopplung einer Rotationsantriebswelle (5) ist und das zweite Metallwerkstück (2) ein Kupplungsgehäuse (22) für eine Zentrifugalkraftkupplung ist.

8. Schweißverfahren, umfassend:
Bereitstellung eines Kettenrads (11) oder eines Getriebezahnrads (12) mit einem dicken Nabenteil und einer Vielzahl dünnerer Ansätze (11a), wobei beide auf einer Stirnfläche desselben ausgebildet sind, wobei die Vielzahl an Ansätzen (11a) um den dicken Nabenteil herum und von diesem beabstandet in einem geschlossenen Kreis angeordnet ist, und eines Kupplungsgehäuses (22) für eine Zentrifugalkraftkupplung mit einer Vielzahl an Löchern (22b), die in einem blechartigen Schweißabschnitt (22c) desselben ausgebildet sind und in einem geschlossenen Kreis so angeordnet sind, um das Aufbringen der Vielzahl an Ansätzen (11a) auf die Vielzahl an Löchern (22b) zu ermöglichen;
Aufbringen der Vielzahl an Löchern (22b) auf die Vielzahl an Ansätzen (22b);
Platzieren des Kettenrads (11) oder des Getriebezahnrads (12) auf einer ersten Elektrode (3a) einer Widerstandsschweißmaschine (3);
Herstellen eines Kontakts zwischen einer zweiten Elektrode (3b) der Widerstandsschweißmaschine (3) und der Vielzahl an Ansätzen (11a), die durch die in dem blechartigen Schweißabschnitt (22c) des Kupplungsgehäuses (22) ausgebildeten Löcher (22b) vorstehen; und
Pressen der zweiten Elektrode (3b) auf die Vielzahl an Ansätzen (11a) bei gleichzeitiger Zufuhr eines Schweißstroms durch die erste und zweite Elektrode (3a, 3b) zum Verschmelzen und Umbiegen der Vielzahl an Ansätzen (11a).

## Revendications

1. Procédé de soudage comprenant les étapes consistant à :
fournir une première partie métallique (1) et une seconde partie métallique (2), ladite première partie métallique (1) comprenant une tige (1a) ayant une portion de bossage épaisse et une saillie annulaire plus mince (1b), les deux étant formées sur une face d'extrémité de la tige (1a), ladite saillie (1b) étant autour et espacée de ladite portion de bossage et faisant saillie dans une direction parallèle à une ligne axiale de la tige (1a), ladite seconde partie métallique (2) comprenant un orifice d'adaptation (2a) formé pour s'adapter sur la tige (1a) de la première partie métallique (1), ledit orifice d'adaptation (2a) comportant une pluralité d'encoches (2b) formées autour d'un bord circonférentiel de l'orifice d'adaptation (2a) ;
adapter l'orifice d'adaptation (2a) de la seconde partie métallique (2) sur la tige (1a) de la première partie métallique (1) ;
placer la première partie métallique (1) sur une première électrode (3a) d'une machine de soudage par résistance électrique (3) ;
amener une seconde électrode (3b, 3b') de la machine de soudage par résistance électrique (3) en contact avec la saillie annulaire mince (1b) de la première partie métallique (1) ; et
presser la seconde électrode (3b, 3b') sur la saillie annulaire mince (1b), tout en délivrant un courant de soudage à travers les première et seconde électrodes (3a ; 3b, 3b'), pour fusionner et écraser la saillie (1b) dans la pluralité d'encoches (2b) formées autour du bord circonférentiel de l'orifice d'adaptation (2a).

2. Procédé de soudage selon la revendication 1, comprenant en outre les étapes consistant à :
connecter une électrode délivrant un courant de soudage (3c) de la machine de soudage par résistance électrique (3) à la seconde partie métallique (2) ; et
délivrer un courant de soudage à travers l'électrode délivrant un courant de soudage (3c) pour effectuer un soudage par résistance d'une portion de raccord où la tige (1a) de la première partie métallique (1) est adaptée dans l'orifice d'adaptation (2a) de la seconde partie métallique.

3. Procédé de soudage selon la revendication 2, dans lequel la seconde électrode (3b, 3b') est une électrode à pression de la machine de soudage par résistance et l'électrode à pression est destinée à appliquer une force de pression sur la saillie (1b).

4. Procédé de soudage selon l'une quelconque des revendications 1 à 3, dans lequel la saillie annulaire mince (1b) formée sur la face d'extrémité de la tige (1a) de la première partie métallique (1) comprend une pluralité de saillies minces agencées en une boucle.

5. Procédé de soudage selon l'une quelconque des revendications 1 à 4, dans lequel la première partie métallique (1) est un pignon (11) et la seconde partie métallique (2) est un tambour d'embrayage (22) pour un embrayage centrifuge.

6. Procédé de soudage selon l'une quelconque des revendications 1 à 4, dans lequel la première partie métallique (1) est un engrenage (12) et la seconde partie métallique (2) est un tambour d'embrayage (22) pour un embrayage centrifuge.

7. Procédé de soudage selon l'une quelconque des revendications 1 à 4, dans lequel la première partie métallique (1) est un accouplement d'arbres (6) pour coupler un arbre de sortie rotatif (5) à la seconde partie métallique (2) est un tambour d'embrayage (22) pour un embrayage centrifuge.

8. Procédé de soudage comprenant les étapes consistant à :
fournir l'un d'un pignon (11) et d'un engrenage (12) comportant une portion de bossage épaisse et une pluralité de saillies plus épaisses (11a), les deux étant formées sur une face d'extrémité de ceux-ci, la pluralité de saillies (11a) étant agencées autour et espacées de la portion de bossage épaisse en une boucle, et un tambour d'embrayage (22) pour un embrayage centrifuge comportant une pluralité d'orifices (22b) formés dans une portion soudée de type feuille (22c) de ceux-ci et agencés en une boucle de manière à permettre à la pluralité de saillies (11a) d'être adaptées dans la pluralité d'orifices (22b) ;
adapter la pluralité d'orifices (22b) dans la pluralité de saillies (11a) ;
placer l'un du pignon (11) et de l'engrenage (12) sur une première électrode (3a) d'une machine de soudage par résistance électrique (3) ;
amener une seconde électrode (3b) de la machine de soudage par résistance électrique (3) en contact avec la pluralité de saillies (11a) faisant saillie à travers les orifices (22b) formés dans la portion soudée de type feuille (22c) du tambour d'embrayage (22) ; et
presser la seconde électrode (3b) sur la pluralité de saillies (11a), tout en délivrant un courant de soudage à travers les première et seconde électrodes (3a, 3b) pour fusionner et écraser la pluralité de saillies (11a).
